# FASCICULE DE BREVET EUROPEEN

(11) **EP 3 381 809 B1**
(45) Date de publication et mention de la délivrance du brevet: **15.05.2019**
(21) Numéro de dépôt: 18153344.9
(22) Date de dépôt: 25.01.2018
(51) Int. Cl.: B64D 31/06, F02C 9/42, B64D 45/00, B64D 43/00, F02C 9/46, G07C 5/08

(54) **PROCEDE DE COUPURE AUTOMATIQUE DES MOTEURS D'UN AERONEF BIMOTEUR**
AUTOMATISCHE ABSCHALTVORRICHTUNG VON MOTOREN EINES ZWEIMOTORIGEN LUFTFAHRZEUGS
METHOD FOR AUTOMATICALLY CUTTING OFF THE ENGINES OF A BI-MOTOR AIRCRAFT

(30) Priorité: 27.03.2017 FR 1752525
(43) Date de publication de la demande: 03.10.2018
(73) Titulaire: Airbus Operations S.A.S., 31060 Toulouse (FR)
(72) Inventeur: BEL, Laurent, 31150 GAGNAC-SUR-GARONNE (FR)
(74) Mandataire: Gicquel, Olivier Yves Gérard

(56) Documents cités:
- EP-A1- 2 570 617
- FR-A1- 3 035 642
- US-A1- 2012 116 613

## Description

L'invention concerne un procédé de coupure automatique des moteurs d'un aéronef bimoteur. La mise en oeuvre dudit procédé permet de détecter un fonctionnement anormal d'un ou des deux moteurs et de couper automatiquement, dans certaines conditions, le ou les moteurs présentant un fonctionnement anormal.

Chaque moteur d'aéronef est piloté et surveillé par une unité de contrôle qui lui est dédié (de type FADEC pour full authority digital engine computer: calculateur d'interface moteur). Les unités de contrôle sont connectées à un dispositif d'interface (de type FMGEC pour Flight Management Guidance Envelope Computer : calculateur de gestion du vol, de guidage et d'enveloppe) qui harmonise le pilotage des deux moteurs par les unités de contrôle.

Chaque unité de contrôle active automatiquement un mode de protection lorsque le moteur présente une anomalie de fonctionnement. L'activation d'un mode de protection résulte en l'extinction quasi-instantanée du moteur afin de protéger l'intégrité du moteur et par conséquent d'éviter ultérieurement des opérations de réparation lourdes au sol.

De manière connue, le dispositif d'interface met en oeuvre une logique d'inhibition des modes de protection afin que le mode de protection ne puisse être activé automatiquement que sur un seul des deux moteurs. Le moteur non coupé est dimensionné pour fournir à lui seul une poussée suffisante à l'aéronef pour un atterrissage d'urgence, dans des conditions optimales de sécurité. Dans un cas où le moteur non coupé présente également une anomalie de fonctionnement, la mise en oeuvre de cette logique empêche une coupure automatique dudit moteur, et ce moteur ne pourra être coupé que sur décision du pilote après analyse des paramètres dudit moteur.

Cette logique est parfaitement adaptée aux phases de vol comme la montée après un décollage ou la descente avant un atterrissage puisque durant ces phases, un pilote ne dispose pas de suffisamment de temps pour rallumer un moteur éteint et doit utiliser au mieux la poussée fournie par le second moteur, même si ce dernier présente une anomalie de fonctionnement.

En revanche, la logique n'est pas optimisée pour une phase de vol de croisière où une coupure automatique du moteur présentant l'anomalie la plus sévère et le redémarrage du moteur présentant l'anomalie la moins sévère est souhaitable afin de protéger l'intégrité du moteur le plus endommagé. Le document FR 3 035 642 A1 divulgue les caractéristiques du préambule de la revendication 1.

L'invention répond à ce besoin et concerne un procédé de coupure automatique des moteurs d'un aéronef, l'aéronef comprenant deux moteurs et deux unités de contrôle connectées à un dispositif d'interface, une unité de contrôle étant dédiée à un moteur et étant configurée pour activer un mode de protection résultant en la coupure du moteur lorsque ce dernier présente un cas d'anomalie référencé dans une base de données, un niveau étant associé à chaque cas d'anomalie référencé dans ladite base, selon ce procédé :
- en-deçà d'une altitude et d'une vitesse prédéterminée de l'aéronef, suite à l'activation d'un mode de protection sur un premier moteur par une première unité de contrôle associé audit moteur, le dispositif d'interface reçoit de ladite première unité un signal d'activation comprenant l'information qu'un mode de protection a été activé pour le premier moteur, et à réception dudit signal, le dispositif d'interface envoie à la seconde unité de contrôle, un signal d'inhibition comprenant une instruction interdisant l'activation d'un mode de protection sur le second moteur; et
- à partir d'une altitude et d'une vitesse prédéterminée de l'aéronef, suite à l'activation, par une première unité de contrôle, d'un mode de protection sur un premier moteur présentant un cas d'anomalie référencé dans la base de données, le dispositif d'interface reçoit de ladite première unité un signal d'activation comprenant l'information qu'un mode de protection a été activé pour le premier moteur et reçoit également un signal de niveau comprenant une information relative au niveau du cas d'anomalie, et à réception dudit signal d'activation, le dispositif d'interface envoie à la seconde unité de contrôle, un signal d'inhibition comprenant une instruction interdisant l'activation d'un mode de protection sur le second moteur,
   dans le cas où le second moteur présente par la suite un cas d'anomalie référencé dans la base de données, la seconde unité de contrôle envoie au dispositif d'interface un signal de niveau comprenant une information relative au niveau du cas d'anomalie du second moteur, et à réception dudit signal de niveau, le dispositif d'interface compare le niveau du cas d'anomalie du premier moteur à celui du cas d'anomalie du second moteur,
   si le niveau du cas d'anomalie du second moteur est le plus élevé, le dispositif d'interface envoie à la seconde unité de contrôle un signal d'inhibition comprenant une instruction autorisant l'activation d'un mode de protection automatique sur le second moteur, et ledit mode est activé par la seconde unité de contrôle,
   l'activation d'un mode de protection sur le second moteur reste interdite par le dispositif d'interface sinon.

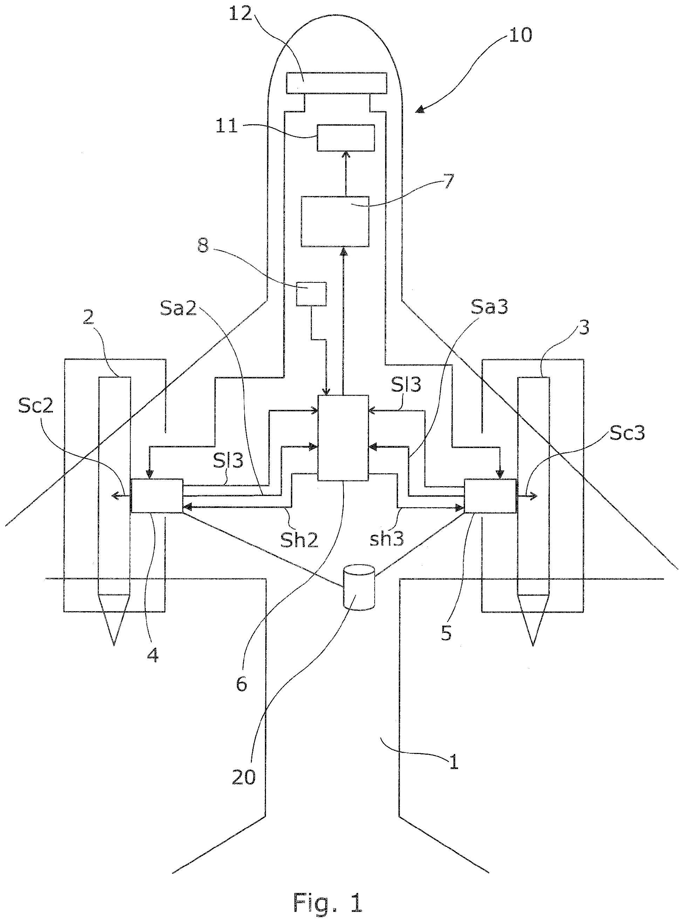

Les caractéristiques de l'invention mentionnées ci-dessus, ainsi que d'autres, apparaîtront plus clairement à la lecture de la description suivante d'exemples de réalisation, ladite description étant faite en relation avec la figure 1 jointe:
- la figure 1 est une vue schématique d'un aéronef comprenant deux moteurs pilotés par des unités de contrôle connectées à un dispositif d'interface moteur pour la mise d'un procédé de coupure automatique des desdits moteurs selon l'invention ;
- la figure 2 est un diagramme illustrant les différentes étapes du procédé de coupure automatique des moteurs d'un aéronef bimoteur selon l'invention dans un premier mode du fonctionnement du dispositif d'interface de la figure 1 ; et
- la figure 3 est un diagramme illustrant les différentes étapes du procédé de coupure automatique des moteurs d'un aéronef bimoteur selon l'invention dans un second mode de fonctionnement du dispositif d'interface de la figure 1.

En référence avec la figure 1, un aéronef 1 comprend deux moteurs 2,3 pilotés chacun par une unité de contrôle 4,5, les deux unités de contrôle étant connectées à un dispositif d'interface 6 pour coordonner le pilotage des moteurs 2,3. Le dispositif d'interface 6 est lui-même connecté à la fois à un dispositif de surveillance 7 (par exemple de type EWD : engine warning display pour affichage des alertes moteur) dédié à la génération d'alertes à destination de l'équipage en cas de défaillance de l'un des moteurs, ainsi qu'à un système de gestion de vol 8 (du type FMS pour flight management system) qui recueille et compile tous les paramètres de vol de l'aéronef et gère le vol de l'aéronef 1.

L'aéronef 1 a en outre un poste de pilotage 10 dans lequel sont classiquement arrangés au moins un écran d'affichage 11 pour afficher, à destination des pilotes, les alertes générées par le dispositif de surveillance, et une interface homme-machine 12 de contrôle des moteurs (par exemple : manettes de poussée moteur) connectée aux unités de contrôle.

De manière connue, chaque unité de contrôle 4,5 est configurée pour activer automatiquement un mode de protection (résultant en la coupure quasi-instantanée du moteur) sur le moteur 2,3 qui lui est associé si le fonctionnement du moteur présente une anomalie de fonctionnement.

Selon l'invention, le dispositif d'interface 6 a deux modes de fonctionnement, la commutation de l'un ou de l'autre mode étant liée à la vitesse et à l'altitude de l'aéronef 1. Le premier mode de fonctionnement est un mode de fonctionnement typique de l'art antérieur où la coupure automatique ne peut se faire que sur le premier des deux moteurs 2,3 qui présente une anomalie de fonctionnement. Dans le second mode de fonctionnement, typiquement mis en oeuvre en phase de vol de croisière (typiquement à altitude et vitesse élevées), la coupure automatique pourra être mise en oeuvre sur l'un puis sur l'autre moteur 2,3 sous certaines conditions.

Une unité de contrôle 4,5 (de type unité centrale) est, par exemple, arrangée dans la nacelle (non représentée) du moteur 2,3 auquel elle est associée. L'unité de contrôle 4,5 est reliée à différents organes (pompes, coupe-circuits...non représentés) du moteur 2,3 permettant de le piloter et de le couper si nécessaire, à l'interface homme-machine 12 pour recevoir les instructions de l'équipage quant au pilotage du moteur, au dispositif d'interface 6, et à un réseau de capteurs (non représentés) installés sur le moteur 2,3 et ses organes de sorte à surveiller des paramètres de fonctionnement du moteur et de ses organes.

L'unité de contrôle 4,5 a accès à une base de données 20 qui est une bibliothèque de tous les cas possibles d'anomalies pouvant survenir au moteur 2,3 et qui nécessitent l'activation d'un mode de protection.

La base de données 20 est partagée entre les deux unités de contrôle 4,5 (tel que représenté sur la figure 1), ou en variante, chaque unité de contrôle a accès à une base de données 20 qui lui est propre, les bases de données des deux unités de contrôle étant identiques.

Chaque cas d'anomalie est formé par une seule anomalie ou par un groupe d'anomalies traduisant un fonctionnement du moteur 4,5 et/ou de ses organes au-delà d'une enveloppe de protection nominale. Selon l'invention, à chaque cas répertorié dans la base de données 20 est associé un niveau représentatif de la sévérité du cas d'anomalie, où le niveau est pris parmi une échelle de niveaux. Le niveau est, par exemple, un chiffre, pris sur une échelle de un à dix (un étant indicateur d'une faible sévérité et dix d'une sévérité maximale) obtenu suite à des simulations effectuées sur le moteur 2,3.

A titre d'exemple :
- lorsque la valeur de la température en sortie de tuyère du moteur 2,3 a une tendance à monter et que l'unité de contrôle 4,5 associée au moteur prévoit que ladite valeur va dépasser un seuil maximal admissible dans un laps de temps prédéfini, le mode de protection est activé car l'unité de contrôle 4,5 anticipe, en se basant sur un modèle de simulation, un éventuel départ de feu. Ce cas d'anomalie a un faible niveau car il s'agit d'une anticipation d'un éventuel problème. Le niveau d'un tel cas d'anomalie peut être ajusté à la hausse ou à la baisse en fonction des conditions climatiques (pression, température...) qui peuvent influer sur l'analyse du modèle de simulation par l'unité de contrôle.
- lorsqu'un capteur mécanique détecte une vitesse de rotation excessive d'un arbre moteur, le mode de protection est activé par l'unité de contrôle 4,5 puisque une telle situation témoigne d'une casse moteur. Ce cas d'anomalie a un niveau maximal.
- lorsqu'un capteur détecte un taux de vibration trop élevé du moteur, le mode de protection n'est pas activé par l'unité de contrôle 4,5 car cette anomalie seule n'est pas référencée comme un cas d'anomalie nécessitant une coupure immédiate du moteur.

Lorsque les valeurs recueillies par un ou plusieurs capteurs connectés à l'unité de contrôle 4,5 témoignent d'une anomalie ou d'une pluralité d'anomalies du moteur, l'unité de contrôle 4,5 consulte la base de données 20 pour associer l'anomalie ou le groupe d'anomalies à au moins un des cas répertoriés dans la base. Si l'anomalie ou le groupe d'anomalies correspond à au moins un cas d'anomalie de la base, l'unité de contrôle 4,5 émet une pluralité de signaux à la fois vers le moteur 2,3 qui lui est associé ainsi que vers le dispositif d'interface moteur 6:
- au dispositif d'interface moteur 6 : un signal S12, S13, dit de niveau, comprenant l'information du niveau du cas d'anomalie (ou le niveau le plus élevé des cas d'anomalies détectés si le moteur 2,3 présente plus d'un cas d'anomalie), ainsi qu'un signal Sa2, Sa3, dit d'activation, comprenant l'information qu'un mode de protection a été activé pour le moteur 2,3; et
- au moteur 6 (et ses organes) : un signal Sc2, Sc3, dit de coupure, pour couper le moteur. Le moteur se coupe à réception du signal ce signal de coupure Sc2, Sc3

Le dispositif d'interface 6 (de type unité centrale) est connecté au dispositif de surveillance 7 pour informer les pilotes, via l'écran d'affichage 11, de l'activation du mode de protection sur un moteur 2,3 et du niveau du cas d'anomalie ayant entraîné l'activation (une indication est affichée sur l'écran d'affichage). En outre, le dispositif d'interface 6 est connecté au système de gestion de vol 8 qui lui indique les paramètres d'altitude et vitesse de l'aéronef 1. Le dispositif d'interface 6 sélectionne son mode de fonctionnement en fonction de ces derniers paramètres. A titre d'exemple, le second mode de fonctionnement est activé pour une vitesse de l'aéronef supérieure ou égale à 600 km/h, et une altitude de l'aéronef supérieure ou égale à 7000 m, tandis que le premier mode est activé pour une vitesse de l'aéronef 1 inférieure à 600 km/h et une altitude de l'aéronef inférieure à 7000 m.

Le dispositif d'interface 6 est configuré pour recevoir le signal d'activation Sa2, Sa3 de chaque unité de contrôle et pour transmettre un signal d'inhibition Sh1, Sh2 à chaque unité de contrôle 4,5 pour autoriser ou interdire l'activation d'un mode de protection selon les instructions contenues dans le signal.

Le dispositif d'interface 6 est en outre configuré pour recevoir le signal de niveau Sl1, Sl2 de chaque unité de contrôle 4,5 et, dans le cas où elle reçoit un signal de niveau d'un second moteur 2,3 après avoir reçu un signal de niveau d'un premier moteur, pour comparer les niveaux des cas d'anomalies contenus dans les signaux de niveaux Sl1 et Sl2.

Les signaux échangés entre une unité de contrôle 4,5 et le dispositif d'interface 6 peuvent être de tout type connu de l'homme du métier. Les signaux d'activation Sa2, Sa3 et d'inhibition Sh2, Sh3 sont par exemple des signaux Booléen, à deux états VRAI ou FAUX. Dans ce cas, le signal d'inhibition Sh2,Sh3 autorise une unité de contrôle 4,5 à activer un mode de protection dans un état VRAI ou à l'inverse, interdit, dans un état FAUX, à une unité de contrôle d'activer 4,5 un mode de protection en inhibant l'envoi au dispositif d'interface 6 du signal d'activation Sa2,Sa3 et l'envoi du signal de coupure Sc2, Sc3 au moteur 2,3 . Le signal d'activation Sa2, Sa3 indique dans un état VRAI que le mode de protection est activé pour le moteur 2,3 ou dans un état FAUX qu'aucun mode de protection n'est activé pour le moteur 2,3.

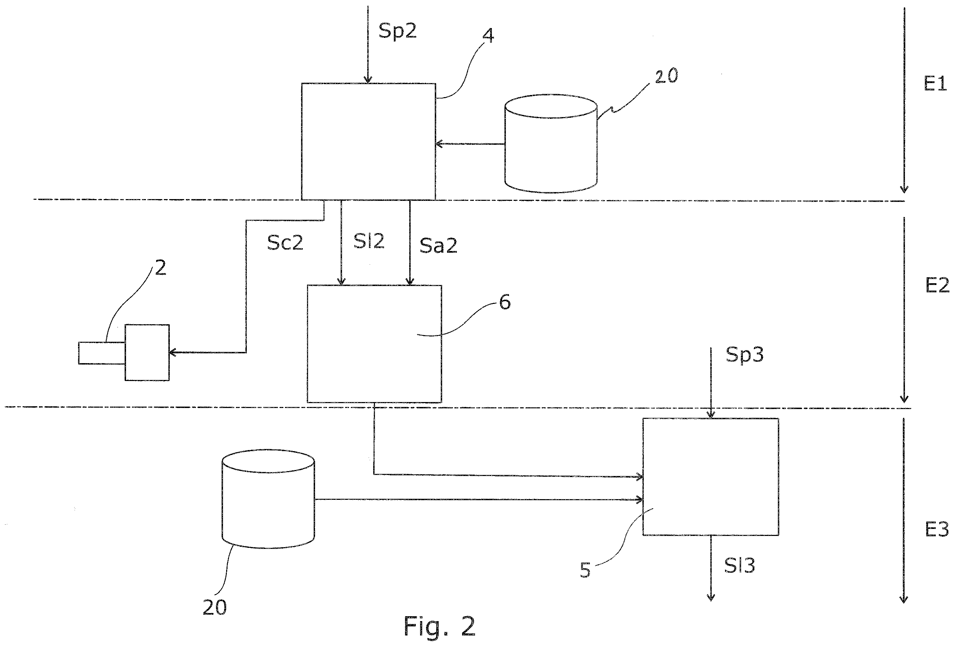

Dans un exemple de fonctionnement du premier mode de fonctionnement du dispositif d'interface 6, et en relation avec la figure 2, lorsqu'un premier moteur 2 présente une anomalie de fonctionnement, au moins un capteur associé au premier moteur transmet à la première unité de contrôle 4 un signal Sp2 (non représenté sur la figure 1) traduisant cette anomalie (par exemple l'amplitude du signal du capteur dépasse un seuil prédéterminé lorsque le signal du capteur est un signal analogique).

Dans une première étape E1, la première unité de contrôle 4, associée au premier moteur 2, consulte la base de données 20 pour rechercher une correspondance entre l'anomalie ou le groupe d'anomalies et au moins un des cas d'anomalies répertoriés dans la base. Si une correspondance est trouvée, la première unité de contrôle 4 envoie le signal de coupure Sc2 vers le premier moteur 2 et envoie au dispositif d'interface 6 un signal d'activation Sa2 indiquant la mise en oeuvre du mode de protection, ainsi que le signal de niveau Sl2 indiquant le niveau du cas d'anomalie ayant déclenché l'activation du mode de protection. Si aucune correspondance n'est trouvée, aucun signal n'est envoyé par la première unité de contrôle 4 et le mode de protection n'est pas activé pour le premier moteur 2.

Dans une étape E2, à la réception du signal d'activation Sa2 indiquant la mise en oeuvre du mode de protection sur le premier moteur 2, le dispositif d'interface 6 envoie un signal d'inhibition Sh3 à la seconde unité de contrôle 5 associée au second moteur 3, ledit signal d'inhibition Sh3 comprenant une instruction (par exemple, état FAUX du signal si ce dernier est un Booléen) bloquant l'envoi du signal de coupure Sc3 au second moteur 3 afin d'interdire à la seconde unité de contrôle 5 d'activer un mode de protection sur le second moteur 3.

Si le second moteur 3 présente par la suite un cas d'anomalie, au moins un capteur associé au second moteur transmet à la seconde unité de contrôle 5 un signal Sp3 (non représenté sur la figure 1) indiquant cette anomalie.

A réception du signal Sp3, la seconde unité de contrôle 5 consulte, dans une étape E3, la base de données 20 pour rechercher une correspondance entre l'anomalie ou le groupe d'anomalies et au moins un des cas d'anomalies répertoriés dans la base. Si une correspondance est trouvée, la seconde unité de l'unité de contrôle 5 peut uniquement envoyer, vers le dispositif d'interface 6, le signal de niveau Sl3 indiquant le niveau du cas d'anomalie du second moteur, mais le second moteur ne sera pas coupé automatiquement.

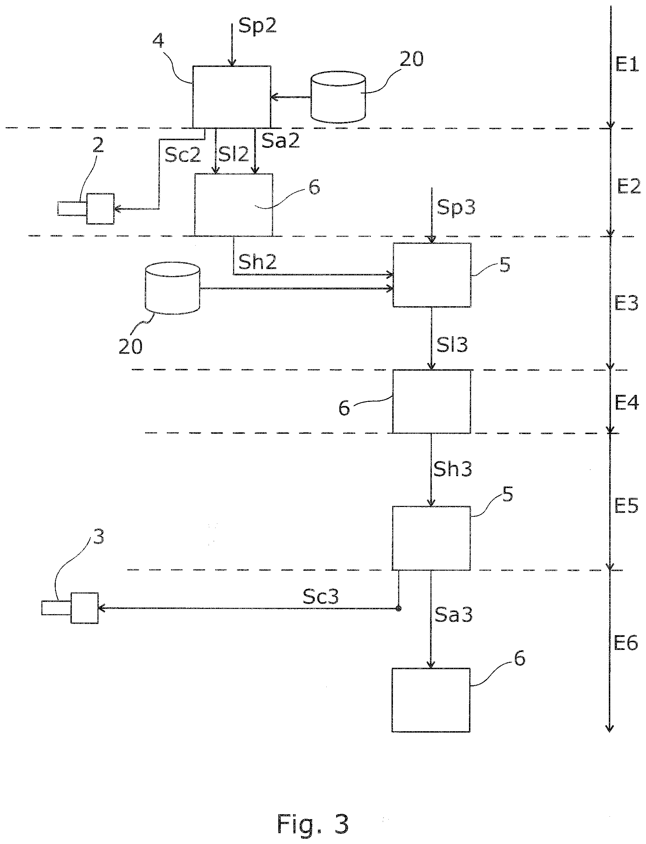

Dans un exemple de fonctionnement du second mode de fonctionnement du dispositif d'interface 5, et en relation avec la figure 3, lorsqu'un premier moteur 2 présente une anomalie de fonctionnement, au moins un capteur associé au premier moteur transmet à la première unité de contrôle 4 un signal Sp2 (non représenté sur la figure 1) indiquant cette anomalie.

Dans une première étape E1, la première unité de contrôle 4, associée au premier moteur 2, consulte la base de données 20 pour rechercher une correspondance entre l'anomalie ou le groupe d'anomalies et au moins un des cas d'anomalies répertoriés dans la base. Si une correspondance est trouvée, la première unité de contrôle 4 envoie le signal de coupure Sc2 pour couper le premier moteur 2 et envoie au dispositif d'interface 6, le signal d'activation Sa2 indiquant la mise en oeuvre du mode de protection, ainsi que le signal de niveau Sl2 indiquant le niveau du cas d'anomalie ayant déclenché l'activation du mode de protection. Si aucune correspondance n'est trouvée, aucun signal n'est envoyé par la première unité de contrôle 4 et le mode de protection n'est pas activé pour le premier moteur 2.

Dans une étape E2, à la réception du signal d'activation Sa2, le dispositif d'interface envoie un signal d'inhibition Sh3 à la seconde unité de contrôle 5, ledit signal d'inhibition Sh3 comprenant une instruction pour interdire à la seconde unité de contrôle 5 d'activer un mode de protection sur le second moteur 3.

Si le second moteur 3 présente par la suite un cas d'anomalie, au moins un capteur associé au second moteur transmet à la seconde unité de contrôle 5 un signal Sp3 (non représenté sur la figure 1) indiquant cette anomalie.

A réception du signal Sp3, la seconde unité de contrôle 5 consulte, dans une étape E3, la base de données 20 pour rechercher une correspondance entre l'anomalie ou le groupe d'anomalies et au moins un des cas d'anomalies répertoriés dans la base. Si une correspondance est trouvée, la seconde unité de contrôle 4 peut uniquement envoyer, vers le dispositif d'interface 6, le signal de niveau Sl3 indiquant le niveau de sévérité du cas d'anomalie présenté par le second moteur 3.

Dans une étape E4, le dispositif d'interface 6 reçoit le signal de niveau Sl3 de la seconde unité de contrôle 5 et compare le niveau du cas d'anomalie présenté par le premier moteur 2 et contenu dans le signal Sl2, avec le niveau du cas d'anomalie présenté par le second moteur 5 et contenu dans le signal S13.

Si le niveau du cas d'anomalie sur le premier moteur 2 est le plus élevé ou égal au niveau du cas d'anomalie sur le second moteur 3, le signal d'inhibition n'est pas modifié et interdit toujours à la seconde unité de contrôle 5 d'activer le mode de protection sur le second moteur 3.

En revanche, si le niveau de sévérité du cas d'anomalie présenté par le second moteur 3 est le plus élevé, le dispositif d'interface 6, dans une étape E5, envoie un signal d'inhibition Sh3 à la seconde unité de contrôle 5, comprenant une instruction (par exemple, passage de l'état FAUX à l'état VRAI du signal si ce dernier est un Booléen) pour autoriser l'envoi, par ladite unité de contrôle, du signal de coupure Sc3 et du signal d'activation Sa3.

A réception de ce signal d'inhibition Sh3 autorisant l'activation du mode de protection, dans une étape E6, la seconde unité de l'unité de contrôle 5 envoie le signal de coupure Sc3 au second moteur 3 et le signal d'activation Sa3 au dispositif d'interface 6. Les deux moteurs 2,3 sont par conséquent coupés et le pilote reçoit cette indication sur l'écran d'affichage 11.

Le procédé de coupure automatique selon l'invention est adapté à l'évolution de la situation opérationnelle de l'aéronef 1 tout en répondant à des exigences strictes de sécurité.

En effet, dans le premier mode de fonctionnement du dispositif d'interface 5, du fait de la vitesse ou de l'altitude de l'aéronef 1 pour lesquelles ce premier mode est activé, la coupure automatique des deux moteurs 2,3 est exclue afin que seul le pilote ait le pouvoir d'agir sur tous les moteurs à la fois.

Dans son second mode de fonctionnement, le dispositif d'interface 6 interdit à une unité de contrôle 5 associée à un second moteur 3 d'activer un mode de protection si l'autre unité de contrôle 4 associée à un premier moteur 2 a déjà activé un mode de protection, hormis si le niveau du cas d'anomalie que présente le second moteur 3 a un niveau plus élevé que celui que présente le premier moteur 2. En cas de coupure automatique des deux moteurs 2,3 du fait de l'attitude/vitesse atteintes durant la phase de croisière à laquelle se déroule la coupure du second moteur 3, le pilote, après analyse des paramètres du premier moteur, tentera, à sa discrétion, de redémarrer le premier moteur 1 qui présente un cas d'anomalie moins élevé que le second moteur 3.

## Revendications

1. Procédé de coupure automatique des moteurs d'un aéronef (1), l'aéronef comprenant deux moteurs (2,3) et deux unités de contrôle (4,5) connectées à un dispositif d'interface (6), une unité de contrôle (4,5) étant dédiée à un moteur (2,3) et étant configurée pour activer un mode de protection résultant en la coupure du moteur lorsque ce dernier présente un cas d'anomalie référencé dans une base de données (20), un niveau étant associé à chaque cas d'anomalie référencé dans ladite base (20), **caractérisé en ce que** :
• en-deçà d'une altitude prédéterminée et d'une vitesse prédéterminée de l'aéronef (1), suite à l'activation d'un mode de protection sur un premier moteur (2) par une première unité de contrôle (4) associé audit moteur, le dispositif d'interface (6) reçoit de ladite première unité un signal d'activation (Sa2) comprenant l'information qu'un mode de protection a été activé pour le premier moteur (2), et à réception dudit signal (Sa2), le dispositif d'interface (6) envoie à la seconde unité de contrôle (5), un signal d'inhibition (Sh3) comprenant une instruction interdisant l'activation d'un mode de protection sur le second moteur (3); et
• à partir d'une altitude prédéterminée et d'une vitesse prédéterminée de l'aéronef (1), suite à l'activation, par une première unité de contrôle (4), d'un mode de protection sur un premier moteur (2) présentant un cas d'anomalie référencé dans la base de données (20), le dispositif d'interface (6) reçoit de ladite première unité un signal d'activation (Sa2) comprenant l'information qu'un mode de protection a été activé pour le premier moteur (2) et reçoit également un signal de niveau (Sl2) comprenant une information relative au niveau du cas d'anomalie, et à réception dudit signal d'activation (Sa2), le dispositif d'interface (6) envoie à la seconde unité de contrôle (5), un signal d'inhibition (Sh3) comprenant une instruction interdisant l'activation d'un mode de protection sur le second moteur (3),
dans le cas où le second moteur (3) présente par la suite un cas d'anomalie référencé dans la base de données (20), la seconde unité de contrôle (5) envoie au dispositif d'interface (6) un signal de niveau (S13) comprenant une information relative au niveau du cas d'anomalie du second moteur (5), et à réception dudit signal de niveau (Sl3), le dispositif d'interface (6) compare le niveau du cas d'anomalie du premier moteur (2) à celui du cas d'anomalie du second moteur (3), si le niveau du cas d'anomalie du second moteur (3) est le plus élevé, le dispositif d'interface (6) envoie à la seconde unité de contrôle (5) un signal d'inhibition(Sh3) comprenant une instruction autorisant l'activation d'un mode de protection automatique sur le second moteur (3), et ledit mode est activé par la seconde unité de contrôle (5),
l'activation d'un mode de protection sur le second moteur (3) reste interdite par le dispositif d'interface (6) sinon.

2. Procédé selon la revendication 1, **caractérisé en ce que** la vitesse prédéterminée est supérieure ou égal à 600 km/h.

3. Procédé selon la revendication 1 ou 2, **caractérisé en ce que** l'altitude prédéterminée est supérieure ou égal à 7000 m.

4. Procédé selon l'une quelconque des revendications 1 à 3, **caractérisé en ce qu'**une indication relative à l'activation d'un mode de protection sur un moteur (2,3) par une unité de contrôle (4,5) est affichée sur un écran d'affichage (11) compris dans un poste de pilotage (10) de l'aéronef (1).

5. Procédé selon l'une quelconque des revendications 1 à 4, **caractérisé en ce qu'**une indication relative au niveau d'un cas d'anomalie d'un moteur (2,3) est affichée sur un écran d'affichage (11) compris dans un poste de pilotage (10) de l'aéronef (1).

## Patentansprüche

1. Verfahren zur automatischen Abschaltung der Motoren eines Luftfahrzeugs (1), wobei das Luftfahrzeug zwei Motoren (2, 3) und zwei Steuereinheiten (4, 5), die mit einer Schnittstellenvorrichtung (6) verbunden sind, umfasst, wobei jeweils eine Steuereinheit (4, 5) für einen Motor (2, 3) bestimmt ist und dafür ausgelegt ist, einen Schutzmodus zu aktivieren, der die Abschaltung des Motors zur Folge hat, wenn dieser Letztere einen Anomaliefall aufweist, der in einer Datenbank (20) verzeichnet ist, wobei jedem Anomaliefall, der in der Datenbank (20) verzeichnet ist, ein Grad zugeordnet ist, **dadurch gekennzeichnet, dass**:
• unterhalb einer vorbestimmten Höhe und einer vorbestimmten Geschwindigkeit des Luftfahrzeugs (1), im Anschluss an die Aktivierung eines Schutzmodus an einem ersten Motor (2) durch eine diesem Motor zugeordnete erste Steuereinheit (4), die Schnittstellenvorrichtung (6) von dieser ersten Einheit ein Aktivierungssignal (Sa2) empfängt, das die Information umfasst, dass ein Schutzmodus für den ersten Motor (2) aktiviert worden ist, und bei Empfang des Signals (Sa2) die Schnittstellenvorrichtung (6) an die zweite Steuereinheit (5) ein Inhibitionssignal (Sh3) sendet, das eine Anweisung umfasst, welche die Aktivierung eines Schutzmodus am zweiten Motor (3) untersagt; und
• ab einer vorbestimmten Höhe und einer vorbestimmten Geschwindigkeit des Luftfahrzeugs (1), im Anschluss an die Aktivierung eines Schutzmodus an einem ersten Motor (2), der einen in der Datenbank (20) verzeichneten Anomaliefall aufweist, durch eine erste Steuereinheit (4), die Schnittstellenvorrichtung (6) von dieser ersten Einheit ein Aktivierungssignal (Sa2) empfängt, das die Information umfasst, dass ein Schutzmodus für den ersten Motor (2) aktiviert worden ist, und außerdem ein Gradsignal (Sl2) empfängt, das eine Information bezüglich des Grades des Anomaliefalls umfasst, und bei Empfang des Aktivierungssignals (Sa2) die Schnittstellenvorrichtung (6) an die zweite Steuereinheit (5) ein Inhibitionssignal (Sh3) sendet, das eine Anweisung umfasst, welche die Aktivierung eines Schutzmodus am zweiten Motor (3) untersagt;
in dem Fall, dass der zweite Motor (3) später einen in der Datenbank (20) verzeichneten Anomaliefall aufweist, die zweite Steuereinheit (5) an die Schnittstellenvorrichtung (6) ein Gradsignal (Sl3) sendet, das eine Information bezüglich des Grades des Anomaliefalls des zweiten Motors (5) umfasst, und bei Empfang dieses Gradsignals (Sl3) die Schnittstellenvorrichtung (6) den Grad des Anomaliefalls des ersten Motors (2) mit demjenigen des Anomaliefalls des zweiten Motors (3) vergleicht,
falls der Grad des Anomaliefalls des zweiten Motors (3) der höhere ist, die Schnittstellenvorrichtung (6) an die zweite Steuereinheit (5) ein Inhibitionssignal (Sh3) sendet, das eine Anweisung umfasst, welche die automatische Aktivierung eines Schutzmodus am zweiten Motor (3) genehmigt, und dieser Modus durch die zweite Steuereinheit (5) aktiviert wird,
andernfalls die Aktivierung eines Schutzmodus am zweiten Motor (3) weiterhin durch die Schnittstellenvorrichtung (6) untersagt bleibt.

2. Verfahren nach Anspruch 1, **dadurch gekennzeichnet, dass** die vorbestimmte Geschwindigkeit größer oder gleich 600 km/h ist.

3. Verfahren nach Anspruch 1 oder 2, **dadurch gekennzeichnet, dass** die vorbestimmte Höhe größer oder gleich 7000 m ist.

4. Verfahren nach einem der Ansprüche 1 bis 3, **dadurch gekennzeichnet, dass** eine Angabe bezüglich der Aktivierung eines Schutzmodus an einem Motor (2, 3) durch eine Steuereinheit (4, 5) auf einem Anzeigebildschirm (11) angezeigt wird, der in einem Cockpit (10) des Luftfahrzeugs (1) vorhanden ist.

5. Verfahren nach einem der Ansprüche 1 bis 3, **dadurch gekennzeichnet, dass** eine Angabe bezüglich eines Grades eines Anomaliefalls eines Motors (2, 3) auf einem Anzeigebildschirm (11) angezeigt wird, der in einem Cockpit (10) des Luftfahrzeugs (1) vorhanden ist.

## Claims

1. Method for the automatic shutdown of the engines of an aircraft (1), the aircraft comprising two engines (2, 3) and two control units (4, 5) connected to an interface device (6), one control unit (4, 5) being dedicated to one engine (2, 3) and being configured for activating a protection mode resulting in the shutdown of the engine when the latter is exhibiting a case of anomaly referenced in a database (20), a level being associated with each case of anomaly referenced in the said database (20), **characterized in that**:
• below a predetermined altitude and a predetermined speed of the aircraft (1), following the activation of a protection mode on a first engine (2) by a first control unit (4) associated with the said engine, the interface device (6) receives from the said first unit an activation signal (Sa2) comprising the information that a protection mode has been activated for the first engine (2) and, on reception of the said signal (Sa2), the interface device (6) sends to the second control unit (5) an inhibit signal (Sh3) comprising an instruction prohibiting the activation of a protection mode on the second engine (3); and
• starting from a predetermined altitude and a predetermined speed of the aircraft (1), following the activation, by a first control unit (4), of a protection mode on a first engine (2) exhibiting a case of anomaly referenced in the database (20), the interface device (6) receives from the said first unit an activation signal (Sa2) comprising the information that a protection mode has been activated for the first engine (2) and also receives a level signal (Sl2) comprising information relating to the level of the case of anomaly and, on reception of the said activation signal (Sa2), the interface device (6) sends to the second control unit (5) an inhibit signal (Sh3) comprising an instruction prohibiting the activation of a protection mode on the second engine (3),
in the case where the second engine (3) subsequently exhibits a case of anomaly referenced in the database (20), the second control unit (5) sends to the interface device (6) a level signal (Sl3) comprising information relating to the level of the case of anomaly of the second engine (5) and, on reception of the said level signal (Sl3), the interface device (6) compares the level of the case of anomaly of the first engine (2) with that of the case of anomaly of the second engine (3),
if the level of the case of anomaly of the second engine (3) is the highest, the interface device (6) sends to the second control unit (5) an inhibit signal (Sh3) comprising an instruction authorizing the activation of an automatic protection mode on the second engine (3) and the said mode is activated by the second control unit (5),
the activation of a protection mode on the second engine (3) remains prohibited by the interface device (6) otherwise.

2. Method according to Claim 1, **characterized in that** the predetermined speed is greater than or equal to 600 km/h.

3. Method according to Claim 1 or 2, **characterized in that** the predetermined altitude is greater than or equal to 7000 m.

4. Method according to any one of Claims 1 to 3, **characterized in that** an indication relating to the activation of a protection mode on an engine (2, 3) by a control unit (4, 5) is displayed on a display screen (11) comprised in a cockpit (10) of the aircraft (1).

5. Method according to any one of Claims 1 to 4, **characterized in that** an indication relating to the level of a case of anomaly of an engine (2, 3) is displayed on a display screen (11) comprised in a cockpit (10) of the aircraft (1).
